# FASCICULE DE BREVET EUROPEEN

(11) **EP 0 401 082 B1**
(45) Date de publication et mention de la délivrance du brevet: **16.03.1994**
(21) Numéro de dépôt: 90401346.3
(22) Date de dépôt: 21.05.1990
(51) Int. Cl.: G21C 19/30, G21C 3/322

(54) **Assemblage combustible d'un réacteur nucléaire comportant un dispositif de retenue de particules contenues dans le fluide de refroidissement du réacteur**
Kernreaktorbrennstabbündel mit einer Vorrichtung zum Auffangen von Teilchen, die sich im Reaktorkühlwasser befinden
Nuclear reactor fuel assembly comprising a device for retaining particles present in the reactor coolant liquid

(30) Priorité: 02.06.1989 FR 8907346
(43) Date de publication de la demande: 05.12.1990
(73) Titulaire: FRAMATOME, 92400 Courbevoie (FR); COGEMA, F-78141 Velizy Villacoublay (FR)
(72) Inventeur: Grattier, Bernard, F-69570 Dardilly (FR)
(74) Mandataire: Bouget, Lucien

(56) Documents cités:
- EP-A- 0 213 813
- DE-A- 1 464 970
- US-A- 3 820 226

## Description

L'invention concerne un assemblage combustible d'un réacteur nucléaire comportant un dispositif de retenue de particules contenues dans le fluide de refroidissement du réacteur.

Les réacteurs nucléaires refroidis à l'eau et en particulier les réacteurs nucléaires refroidis par de l'eau sous pression comportent un coeur constitué par des assemblages prismatiques disposés côte à côte et verticalement. Chacun des assemblages combustibles est constitué par un faisceau de crayons combustibles parallèles maintenus dans une ossature.

L'ossature de l'assemblage combustible est constituée par une pluralité de grilles-entretoises transversales espacées suivant la longueur de l'assemblage et assurant le maintien des crayons suivant un réseau régulier dans les plans de section droite transversaux du faisceau. Les grilles-entretoises sont reliées entre elles par des tubes-guides longitudinaux se substituant à des crayons combustibles, dans certaines cellules des grilles-entretoises, et fixés aux grilles.

L'ossature de l'assemblage comporte également deux embouts d'extrémité reliés à l'extrémité des tubes-guides dont la longueur est supérieure à la longueur des crayons combustibles.

L'un des embouts de l'assemblage, appelé embout inférieur, vient reposer sur la plaque inférieure de coeur du réacteur qui est percée de trous au niveau de chacun des assemblages pour permettre le passage de l'eau de refroidissement du réacteur à travers le coeur, dans la direction verticale et de bas en haut.

Le fluide de refroidissement des crayons combustibles traverse la plaque adaptatrice de l'embout inférieur par des ouvertures appelées passages d'eau qui sont soit de forme circulaire (d'un diamètre d'environ 7 à 10 mm) ou oblongue (lumières d'environ 10 mm de large par 15 à 50 mm de longueur). Des débris qui peuvent être présents dans le circuit primaire du réacteur sont susceptibles d'être entraînés par l'eau sous pression en circulation et dans le cas où leur taille est faible (par exemple inférieure à 10 mm), ces débris peuvent passer au travers de la plaque adaptatrice de l'embout inférieur dont les passages d'eau ont une section importante. Ces débris peuvent venir se coincer entre les crayons combustibles et les cellules de la première grille c'est-à-dire de la grille-entretoise maintenant les crayons suivant un réseau régulier disposée le plus près de l'embout inférieur.

Ces débris soumis aux sollicitations hydrauliques axiales et transversales qui sont importantes dans cette zone peuvent user le gainage du crayon combustible. Il risque d'en résulter une perte d'étanchéité de ce gainage ainsi qu'une augmentation du taux d'activité du circuit primaire du réacteur.

On a donc proposé des dispositifs permettant de filtrer le fluide de refroidissement du réacteur soit pendant les essais à chaud soit encore pendant le fonctionnement du réacteur.

Dans le premier cas FR-A-2577345, les éléments filtrants peuvent être reliés à la plaque inférieure de coeur et disposés sur celle-ci dans la position des assemblages combustibles avant le chargement du coeur.

Dans le second cas FR-A-2280278, les éléments filtrants sont associés aux assemblages combustibles et disposés dans leur partie inférieure. Ces éléments filtrants peuvent être constitués par des structures en tôle ou en fils métalliques disposées dans l'embout inférieur de l'assemblage qui permettent d'arrêter les débris dont la taille est supérieure à la plus grande dimension de la section de passage entre un crayon combustible et une cellule de grille.

De tels dispositifs peuvent être complexes et introduisent une perte de charge relativement importante dans la circulation du fluide de refroidissement à travers l'assemblage combustible.

En outre, ces dispositifs placés dans l'embout inférieur de l'assemblage peuvent être relativement encombrants et gênants, lors des opérations de chargement et de déchargement d'assemblages du coeur et lors du démontage et du remontage des liaisons des tubes-guides et de l'embout inférieur.

Le but de l'invention est donc de proposer un assemblage combustible d'un réacteur nucléaire refroidi par de l'eau comportant une ossature de forme allongée constituée par une pluralité de grilles-entretoises transversales espacées suivant la longueur de l'assemblage, des tubes-guides longitudinaux fixés sur les grilles-entretoises et deux embouts d'extrémité transversaux, un faisceau de crayons combustibles parallèles et de direction longitudinale maintenus par les grilles-entretoises pour constituer un réseau régulier dans des plans de section droite parallèles aux grilles et perpendiculaires aux tubes-guides ainsi qu'un dispositif de retenue de particules contenues dans l'eau de refroidissement du réacteur disposé dans la partie inférieure de l'assemblage, c'est-à-dire dans sa partie voisine de l'embout d'extrémité venant reposer en service sur la plaque inférieure de coeur du réacteur appelé embout inférieur, une filtration efficace de l'eau de refroidissement du réacteur étant effectuée par le dispositif de retenue, sans introduire de perte de charge excessive sur la circulation du fluide de refroidissement, sans augmenter l'encombrement de l'assemblage combustible au niveau de son embout inférieur et tout en gardant une possibilité de démontage de cet embout.

Dans ce but, le dispositif de retenue de particules est constitué par une pluralitée de tubes disposés parallèlement aux crayons combustibles de l'assemblage, dans chacun des interstices situés entre des crayons adjacents et sur toute la longueur d'une zone située entre la partie supérieure de l'embout inférieur de l'assemblage et la partie inférieure de la première grille-entretoise, c'est-à-dire de la grille-entretoise disposée le plus près de l'embout inférieur.

Afin de bien faire comprendre l'invention, on va maintenant décrire, à titre d'exemple non limitatif, en se référant aux figures jointes en annexe, un assemblage combustible suivant l'invention et suivant plusieurs modes de réalisation différents, comportant un dispositif de retenue de particules.

La figure 1 est une vue en élévation et en coupe par un plan vertical de la partie inférieure d'un assemblage combustible suivant l'invention comportant un dispositif de retenue de particules.

La figure 2 est une vue partielle en plan de la première grille-entretoise de l'assemblage combustible représenté sur la figure 1.

La figure 3 est une vue partielle en élévation et en coupe de la partie inférieure d'un assemblage combustible suivant l'invention montrant le mode de fixation des tubes du dispositif de retenue sur la première grille-entretoise, suivant une première variante de réalisation.

La figure 4 est une vue partielle en élévation et en coupe de la partie inférieure d'un assemblage combustible suivant l'invention montrant le mode de fixation des tubes du dispositif de retenue, suivant une seconde variante de réalisation.

La figure 5 est une vue en élévation et en coupe partielle de la partie inférieure d'un assemblage combustible suivant l'invention et suivant un mode de réalisation différent du mode de réalisation représenté sur les figures 1 à 4.

La figure 6 est une vue en plan suivant 6-6 de la figure 5.

La figure 7 est une vue en coupe suivant 7-7 de la figure 6.

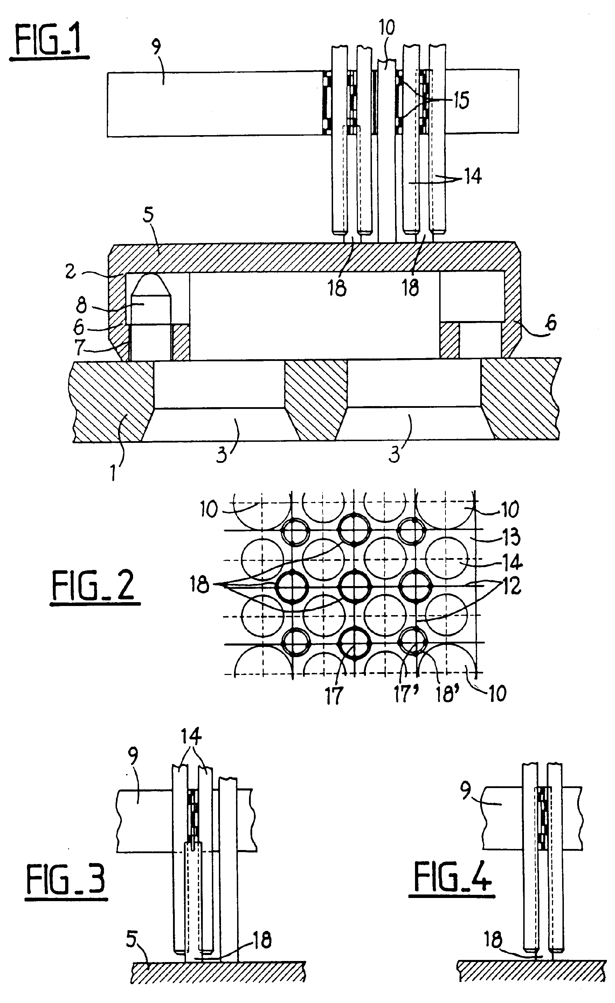

Sur la figure 1, on voit la partie inférieure d'un assemblage combustible suivant l'invention reposant sur la plaque inférieure de coeur 1 d'un réacteur nucléaire par l'intermédiaire de son embout inférieur 2.

La plaque inférieure de coeur 1 est traversée par des trous de passage d'eau 3 débouchant sous l'embout inférieur 2 de l'assemblage combustible. L'embout inférieur 2 comporte une plaque adaptatrice 5 et des pieds supports 6 dont la partie inférieure repose sur la plaque inférieure de coeur 1. Deux des pieds supports 6 disposés suivant une diagonale de l'embout de forme carrée comportent des trous de passage 7 pour un pion de positionnement 8 solidaire de la face supérieure de la plaque inférieure de coeur 1.

L'ossature de l'assemblage combustible comporte un ensemble de grilles-entretoises telles que la grille 9 représentée sur la figure 1 reliées à des tubes-guides 10 de direction longitudinale.

Les grilles-entretoises sont régulièrement espacées suivant la direction longitudinale de l'assemblage correspondant à la direction longitudinale des tubes-guides 10.

Sur la figure 1, on n'a représenté que la grille inférieure 9 ou première grille-entretoise, c'est-à-dire la grille-entretoise située le plus près de l'embout inférieur 2 par l'intermédiaire duquel l'assemblage combustible repose sur la plaque inférieure de coeur.

Comme il est visible sur la figure 2, les grilles-entretoises sont constituées par des plaquettes 12 assemblées à angle droit et délimitant des cellules 13 d'un réseau à mailles carrées dans lequel sont disposés les crayons combustibles 14 qui sont maintenus à l'intérieur des cellules par des éléments 15 en saillie par rapport aux plaquettes délimitant les cellules et constituant soit des bossettes soit des ressorts de maintien.

Certaines cellules 13 du réseau de la grille reçoivent un tube-guide 10 au lieu d'un crayon combustible 14. Les tubes-guides 10 ont un diamètre supérieur au diamètre des crayons 14 et sont généralement fixés par soudage sur les plaquettes délimitant la cellule correspondante.

Les tubes-guides 10 ont également une longueur supérieure à celle des crayons 14 et sont fixés à leurs extrémités sur les embouts de l'assemblage combustible. En particulier, les extrémités inférieures des tubes-guides 10 sont fixées sur la plaque adaptatrice 5 de l'embout inférieur 2.

Les extrémités des crayons combustibles 14 se trouvent à une certaine distance de la plaque adaptatrice des embouts.

Selon l'invention, des tubes 18 sont fixés dans chacun des interstices entre quatre crayons 14 de l'assemblage dans des positions adjacentes.

Les tubes 18 s'étendent sur toute la longueur de la zone comprise entre la face supérieure de la plaque adaptatrice 5 de l'embout inférieur et la face inférieure de la grille inférieure 9.

Les tubes 18' qui sont placés dans un interstice situé entre trois crayons combustibles adjacents 14 et un tube-guide 10 ont un diamètre inférieur au diamètre des autres tubes 18 situés dans un interstice entre quatre crayons combustibles adjacents 14.

Les tubes 18 sont centrés sur le croisillon de grilles 17 commun aux quatre cellules de grille 13 dans lesquelles sont placés les quatre crayons combustibles adjacents 14.

Les tubes 18' sont légèrement décentrés par rapport au croisillon de grilles 17' correspondant, en direction du crayon combustible 14 situé dans une position opposée au tube-guide 10 suivant la direction des diagonales des cellules 13.

Les tubes 18 et 18' fractionnent l'interstice disposé entre quatre crayons combustibles ou éventuellement entre trois crayons combustibles et un tube-guide de l'assemblage de manière à interdire le passage de particules d'une certaine taille entre les crayons combustibles 14 et les parois des cellules 13.

Les particules contenues dans l'eau de refroidissement traversant la plaque inférieure de coeur et l'embout inférieur 2 au travers de la plaque adaptatrice 5 sont donc retenues au niveau de la plaque adaptatrice et ne pénètrent pas dans l'assemblage combustible pour venir se coincer entre les crayons combustibles et les parois des cellules 13 de la première grille-entretoise.

Sur la figure 3, on a représenté un tube 18 du dispositif de retenue de particules intercalé entre la plaque adaptatrice 5 de l'embout d 'n assemblage combustible et la première grille-entretoise 9. Le tube 18 est intercalé entre des crayons combustibles 14 adjacents et fixé par son extrémité supérieure sur des plaquettes 12 délimitant des cellules 13 de la grille-entretoise 9. Pour celà, le tube 18 est fendu à sa partie supérieure et suivant quatre génératrices, les fentes étant ensuite engagées sur les plaquettes 12 de la grille 9 constituant un croisillon au niveau duquel est placé le tube 18.

On réalise ensuite le soudage du tube 18 sur les plaquettes de la grille-entretoise 9. Le soudage peut être réalisé par faisceau d'électrons ou par faisceau laser. Les matériaux constituant la grille et les tubes du dispositif de retenue doivent être identiques ou tout au moins soudables l'un sur l'autre. Les fentes d'encastrement des tubes 18 peuvent avoir une longueur d'environ 3 à 5 mm.

Le soudage de ces tubes 18 à la partie inférieure de la grille-entretoise 9 n'est pas facile à réaliser et il peut être avantageux de prévoir, à la partie supérieure des tubes 18, des fentes dont la longueur est sensiblement égale à la hauteur de la grille-entretoise 9. Dans ce cas, le tube 18, comme il est visible sur la figure 4, est encastré sur la grille-entretoise 9 jusqu'à sa partie supérieure. Le soudage des tubes 18 peut être effectué également par faisceau d'électrons ou par faisceau laser dans la partie supérieure des tubes 18, au niveau de la face supérieure de la grille-entretoise 9.

Suivant le type d'assemblage combustible dans lequel est monté le dispositif de retenue et suivant le mode de fixation des tubes, les tubes 18 ou 18' auront une longueur de l'ordre de 50 à 80 mm.

Lorsque ces tubes sont fixés uniquement sur la grille inférieure de l'assemblage, par une de leurs extrémités, ils sont susceptibles d'entrer en vibration, sous l'effet des sollicitations hydrauliques produites par le fluide de refroidissement en circulation dans l'assemblage.

Il peut se produire une rupture par fatigue des liaisons soudées entre les tubes 18 et les croisillons de la grille 9.

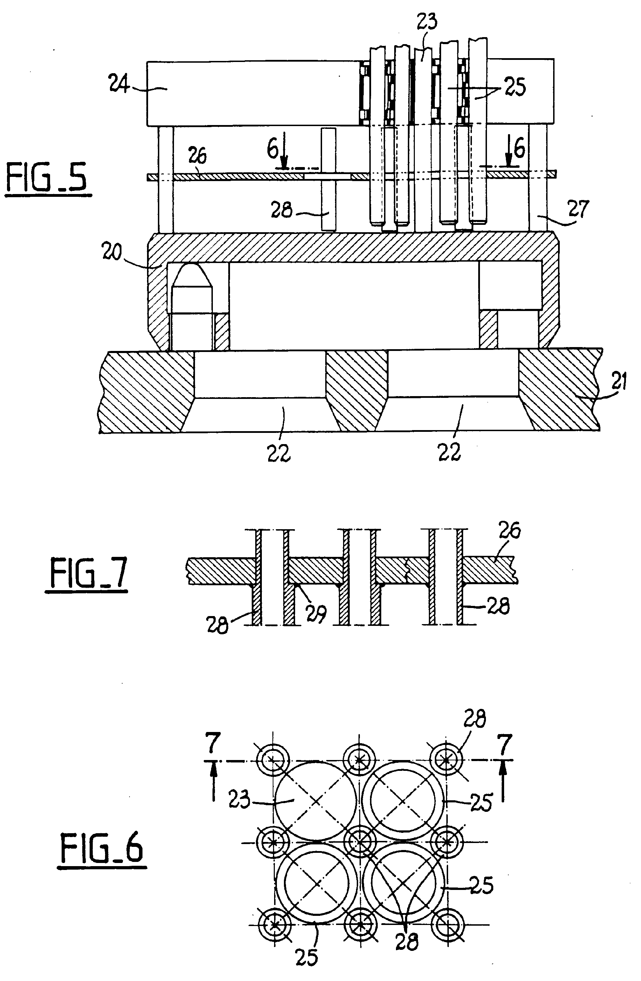

Sur les figures 5, 6 et 7, on a représenté un mode de réalisation de la partie inférieure d'un assemblage combustible comportant un dispositif de retenue constitué par des tubes qui permet d'éviter la mise en vibration des tubes sous l'effet des sollicitations hydrauliques.

L'assemblage combustible repose par l'intermédiaire de son embout inférieur 20 sur la plaque inférieure de coeur 21 qui est traversée par des trous de passage d'eau 22 au niveau de l'assemblage combustible.

Les tubes-guides 23 de l'assemblage combustible sont reliés, à leur extrémité inférieure, à la plaque adaptatrice de l'embout 20 et fixés aux différentes grilles-entretoises disposées suivant la longueur de l'assemblage. Sur la figure 5, on a représenté uniquement la grille-entretoise inférieure 24 et les extrémités inférieures de crayons combustibles 25 maintenus par cette grille-entretoise suivant un réseau régulier, comme il est visible sur la figure 6.

Certaines cellules de la grille-entretoise reçoivent un tube-guide 23 à la place d'un crayon combustible 25.

Comme il est visible sur la figure 5, la partie inférieure de l'assemblage combustible comporte de plus une plaque support 26 disposée parallèlement à la grille-entretoise 24 et à la plaque adaptatrice de l'embout 20 de l'assemblage située dans une position approximativement équidistante de la face supérieure de la plaque adaptatrice et de la face inférieure de la grille-entretoise.

Cette plaque 26 est maintenue par des tubes-entretoises 27 fixés à l'une de leurs extrémités sur la plaque adaptatrice de l'embout 20 et, à leur autre extrémité, sur la partie inférieure de la grille-entretoise 24.

La plaque support 26 est fixée par soudage sur les tubes-entretoises 27 au niveau d'ouvertures traversant la plaque 26.

La plaque 26 comporte également un réseau d'ouvertures permettant le passage de la partie inférieure des tubes-guides 23 et des crayons combustibles 25.

Enfin, la plaque 26 comporte des ouvertures centrées sur l'axe vertical des croisillons de la grille dans lesquelles sont engagés des tubes 28 constituant le dispositif de retenue de particules de l'assemblage combustible.

Les tubes 28 sont fixés par soudage au niveau de leur ouverture de traversée de la plaque support 26.

La longueur des tubes 28 est un peu inférieure à la longueur des tubes entretoises 27, l'extrémité inférieure de ces tubes 28 se trouvant un peu au-dessus de la face supérieure de la plaque adaptatrice de l'embout 20 et l'extrémité supérieure des tubes 28 étant sensiblement dans le plan de la face inférieure de la grille-entretoise 24.

Comme il est visible sur la figure 6, chacun des tubes 28 fractionne un interstice situé entre quatre crayons combustibles 25 de l'assemblage ou entre trois crayons combustibles 25 et un tube-guide 23, de manière qu'il ne subsiste pas de passage libre de grande dimension entre les crayons.

Les particules transportées par le fluide de refroidissement du réacteur ayant une taille supérieure à une certaine limite sont donc arrêtées au niveau de la plaque adaptatrice de l'embout 20. Ces particules ne sont donc pas susceptibles de venir se loger autour des crayons combustibles, dans la grille-entretoise 24.

D'autre part, les tubes 28 qui sont soudés par leur partie centrale sur la plaque support 26 sont beaucoup moins sujets aux vibrations que les tubes 18 représentés sur les figures 3 et 4 qui sont fixés par l'une de leurs extrémités sur la grille-entretoise.

Comme il est visible sur la figure 7, les tubes 28 peuvent comporter un épaulement 29 venant en appui sur la surface inférieure de la plaque support 26 suivant lequel on réalise le soudage entre le tube 28 et la plaque 26. On obtient ainsi une fixation plus résistante que dans le cas d'un tube 28 ne présentant pas d'épaulement et soudé sur la face inférieure de la plaque 26.

En outre, dans ce mode de réalisation, il est possible de réaliser les tubes 28 en un matériau différent du matériau constituant la grille-entretoise inférieure 24. Il est simplement nécessaire que les tubes 28 et la plaque 26 soient constitués par un même matériau ou par des matériaux soudables entre eux.

La liaison entre les tubes 28 et la plaque 26 peut également être réalisée par brasage.

Dans un premier temps, on peut effectuer l'assemblage et le soudage ou le brasage des tubes 28 sur la plaque 26. L'ensemble est ensuite placé dans la partie inférieure de l'assemblage, entre l'embout et la grille-entretoise inférieure.

Afin d'éviter tout débattement axial de l'ensemble constitué par la plaque support 26 et les tubes 28, on peut fixer celle-ci sur des tubes d'entretoisement 27 intercalés entre l'embout et la grille-entretoise inférieure dans les angles de l'assemblage combustible.

Pour réaliser les tubes du dispositif de retenue de particules et la plaque-support, on peut utiliser des matériaux ayant une bonne résistance dans l'ambiance du réacteur nucléaire, tels que des alliages à base de nickel à durcissement structural ou des aciers martensitiques.

L'invention ne se limite pas aux modes de réalisation qui ont été décrits.

On peut imaginer d'autres modes de fixation des tubes du dispositif de retenue, soit sur la grille-entretoise inférieure, soit sur la plaque adaptatrice de l'embout soit encore sur une ou plusieurs plaques intermédiaires ou sur d'autres moyens de support.

L'invention s'applique à tout assemblage combustible d'un réacteur nucléaire refroidi par de l'eau.

## Revendications

1. Assemblage combustible d'un réacteur nucléaire refroidi par de l'eau comportant une ossature de forme allongée constituée par une pluralité de grilles-entretoises (9, 24) transversales espacées suivant la longueur de l'assemblage, des tubes-guides longitudinaux (10, 23) fixés sur les grilles-entretoises (9, 24) et deux embouts d'extrémité (2, 20) transversaux, un faisceau de crayons combustibles (14, 25) parallèles de direction longitudinale maintenus par les grilles-entretoises (9, 24) pour constituer un réseau régulier dans des plans de section droite parallèles aux grilles (9) et perpendiculaires aux tubes-guides (10, 23) ainsi qu'un dispositif de retenue (18, 28, 26) de particules contenues dans l'eau de refroidissement du réacteur disposé dans la partie inférieure de l'assemblage, c'est-à-dire dans sa partie voisine de l'embout d'extrémité (2, 20), venant reposer en service sur la plaque inférieure de coeur (1, 21) du réacteur, appelé embout inférieur, caractérisé par le fait que le dispositif (18, 26, 28) de retenue des particules est constitué par une pluralité de tubes (18, 28), disposés parallèlement aux crayons combustibles (14, 25) de l'assemblage, dans chacun des interstices situés entre des crayons (14, 25) adjacents et sur toute la longueur d'une zone située entre la partie supérieure de l'embout inférieur (2, 20) de l'assemblage et la partie inférieure de la première grille-entretoise (9, 24), c'est-à-dire de la grille-entretoise disposée le plus près de l'embout inférieur (2, 20).

2. Assemblage combustible suivant la revendication 1, caractérisé par le fait que les tubes (18) du dispositif de retenue comportent dans une zone d'extrémité quatre fentes destinées à venir s'encastrer sur un croisillon de la grille-entretoise inférieure (9), au voisinage de sa face inférieure, les tubes (18) étant soudés sur la grille-entretoise (9), au voisinage de sa face inférieure.

3. Assemblage combustible suivant la revendication 1, caractérisé par le fait que chacun des tubes (18) du dispositif de retenue comporte quatre fentes suivant des génératrices, dans sa partie supérieure, dont la longueur est au moins égale à la dimension de la grille-entretoise inférieure (9) dans la direction longitudinale, les zones d'extrémité des tubes (18) étant encastrées sur des croisillons de la grille (9) et soudées sur cette grille au voisinage de sa face supérieure.

4. Assemblage combustible suivant l'une quelconque des revendications 2 et 3, caractérisé par le fait que les tubes (18) sont soudés sur la grille-entretoise (9) par faisceau d'électrons.

5. Assemblage combustible suivant l'une quelconque des revendications 2 et 3, caractérisé par le fait que les tubes (18) sont soudés sur la grille-entretoise (9) par faisceau laser.

6. Assemblage combustible suivant la revendication 1, caractérisé par le fait que le dispositif de retenue est constitué par une plaque support transversale (26) fixée dans une position intermédiaire entre la plaque adaptatrice de l'embout inférieur (20) et la surface inférieure de la grille-entretoise (24) sur laquelle sont fixés les tubes (28) du dispositif de retenue, par leur partie médiane.

7. Assemblage combustible suivant la revendication 6, caractérisé par le fait que les tubes (28) sont fixés sur la plaque (26) par soudage par faisceau d'électrons.

8. Assemblage combustible suivant la revendication 6, caractérisé par le fait que les tubes (28) sont fixés sur la plaque (26) par soudage par faisceau laser.

9. Assemblage combustible suivant la revendication 6, caractérisé par le fait que les tubes (28) sont fixés sur la plaque-support (26) par brasage.

10. Assemblage combustible suivant l'une quelconque des revendications 6 à 9, caractérisé par le fait que des tubes (27) d'une longueur supérieure à la longueur des tubes (28) sont fixés sur des parties périphérique de la plaque support (26) pour constituer des entretoises maintenant le dispositif de retenue entre l'embout inférieur (20) et la grille-entretoise inférieure (24).

11. Assemblage combustible suivant l'une quelconque des revendications 1 à 10, caractérisé par le fait que le dispositif de retenue de particules est réalisé en un alliage de nickel à durcissement structural.

12. Assemblage combustible suivant l'une quelconque des revendications 1 à 10, caractérisé par le fait que le dispositif de retenue (18, 26, 28) est réalisé en un acier martensitique.

## Patentansprüche

1. Brennelementeblock für einen wassergekühlten Kernreaktor, bestehend aus einem länglichen Gerüst, das aus mehreren Querverstrebungsgittern (9, 24) besteht, die in der Länge des Blocks in Abständen angeordnet sind, an den Verstrebungsgittern (9, 24) befestigten Längsführungsrohren (10, 23) und zwei Querendaufsätzen (2, 20), einem Bündel von parallelen, sich in Längsrichtung erstreckenden Brennstäben (14, 25), die durch die Verstrebungsgitter (9, 24) gehalten sind, um in zu den Gittern (9) parallelen und zu den Führungsrohren (10, 23) senkrechten Querschnittsebenen ein regelmäßiges Netz zu bilden, sowie einer Vorrichtung (18, 28, 26) zum Zurückhalten von im Kühlwasser des Reaktors enthaltenen Teilchen, die im unteren Teil des Brennelementeblocks angeordnet ist, d.h. in seinem Teil, der dem Endaufsatz (2, 20) benachbart ist, der in Betrieb auf der unteren Reaktorkernplatte (1, 21) zum Aufliegen kommt und unterer Aufsatz genannt wird, dadurch gekennzeichnet, daß die Vorrichtung (18, 28, 26) zum Zurückhalten der Teilchen aus mehreren Rohren (18, 28) besteht, die parallel zu den Brennstäben (14, 25) des Brennelementeblocks in jedem der Zwischenräume, die zwischen benachbarten Brennstäben (14, 25) bestehen, und auf der ganzen Länge der Zone zwischen dem oberen Teil des unteren Aufsatzes (2, 20) des Brennelementeblocks und dem unteren Teil des ersten Verstrebungsgitters (9, 24), d.h. des dem unteren Aufsatz (2, 20) zunächstliegenden Verstrebungsgitters, angeordnet sind.

2. Brennelementeblock nach Anspruch 1, dadurch gekennzeichnet, daß die Rohre (18) der Zurückhaltevorrichtung in einem Endbereich vier Schlitze besitzen, die auf ein Kreuz des untersten Verstrebungsgitters (9) in Nähe seiner Unterseite aufgesteckt werden, wobei die Rohre (18) an dem Verstrebungsgitter (9) in Nähe seiner Unterseite angeschweißt sind.

3. Brennelementeblock nach Anspruch 1, dadurch gekennzeichnet, daß jedes der Rohre (18) der Zurückhaltevorrichtung in seinem oberen Teil vier sich längs Erzeugender erstreckende Schlitze besitzt, deren Länge mindestens gleich der Abmessung des untersten Verstrebungsgitters (9) in Längsrichtung ist, wobei die Endbereiche der Rohre (18) auf Kreuze des Gitters (9) aufgesteckt und mit diesem Gitter in Nähe seiner Unterseite verschweißt sind.

4. Brennelementeblock nach einem der Ansprüche 2 und 3, dadurch gekennzeichnet, daß die Rohre (18) an dem Verstrebungsgitter (9) durch Elektronenstrahlschweißung befestigt sind.

5. Brennelementeblock nach einem der Ansprüche 2 und 3, dadurch gekennzeichnet, daß die Rohre (18) an dem Verstrebungsgitter (9) durch Laserstrahlschweißung befestigt sind.

6. Brennelementeblock nach Anspruch 1, dadurch gekennzeichnet, daß die Zurückhaltevorrichtungt aus einer Quertragplatte (26) besteht, die in einer Zwischenstellung zwischen der Adapterplatte des unteren Aufsatzes (20) und der Unterseite des Verstrebungsgitters (24) befestigt ist und an der die Rohre (28) der Zurückhaltevorrichtung in ihrer Mitte befestigt sind.

7. Brennelementeblock nach Anspruch 6, dadurch gekennzeichnet, daß die Rohre (28) an der Platte (26) durch Elektronenstrahlschweißung befestigt sind.

8. Brennelementeblock nach Anspruch 6, dadurch gekennzeichnet, daß die Rohre (28) an der Platte (26) durch Laserstrahlschweißung befestigt sind.

9. Brennelementeblock nach Anspruch 6, dadurch gekennzeichnet, daß die Rohre (28) an der Tragplatte (26) durch Verlötung befestigt sind.

10. Brennelementeblock nach einem der Ansprüche 6 bis 9, dadurch gekennzeichnet, daß an Umfangsteilen der Tragplatte (26) Rohre (27) befestigt sind, die länger als die Rohre (28) sind und Verstrebungen bilden, die die Zurückhaltevorrichtung zwischen dem unteren Aufsatz (20) und dem untersten Verstrebungsgitter (24) halten.

11. Brennelementeblock nach einem der Ansprüche 1 bis 10, dadurch gekennzeichnet, daß die Vorrichtung zum Zurückhalten von Teilchen aus einer ausgehärteten Nickellegierung besteht.

12. Brennelementeblock nach einem der Ansprüche 1 bis 10, dadurch gekennzeichnet, daß die Zurückhaltevorrichtung (18, 26, 28) aus einem Martensitstahl besteht.

## Claims

1. Fuel assembly of a water cooled nuclear reactor comprising a framework of elongated shape consisting of a plurality of transverse spacer grids (9,24) spaced apart along the length of the assembly, longitudinal guide-tubes (10,23) fixed to the spacer grids (9,24), and two transverse end nozzles (2,20), a cluster of parallel fuel rods (14,25) extending in a longitudinal direction and maintained by the spacer grids (9,24) so as to constitute a regular network in cross-sectional planes parallel to the grids (9) and perpendicular to the guide-tubes (10,23), and a device (18,28,26) for retaining particles contained in the cooling water of the reactor located in the lower part of the assembly, i.e. in the part thereof in the vicinity of the end nozzle (2,20) which in service rests on a bottom core plate (1,21) of the reactor, termed bottom nozzle, characterised in that the particle retaining device (18,26,28) is made up of a plurality of tubes (18,28) which are parallel to the fuel rods (14,25) of the assembly and disposed in all the gaps between adjacent rods (14,25) and over the entire length of a zone located between the upper part of the bottom nozzle (2,20) of the assembly and the lower part of the bottom spacer grid (9,24), i.e. the spacer grid closest to the bottom nozzle (2,20).

2. Fuel assembly according to claim 1, characterised in that the tubes (18) of the retaining device comprise in an end zone four slots adapted to engage on a cross-shaped structure of the bottom spacer grid (9) in the vicinity of the underside thereof, the tubes (18) being welded to the spacer grid (9) in the vicinity of the underside thereof.

3. Fuel assembly according to claim 1, characterised in that each of the tubes (18) of the retaining device comprises four slots on generatrices, in the upper part of the tube, the length of the slots being at least equal to the dimension of the bottom spacer grid (9) in the longitudinal direction, the end zones of the tubes (18) being engaged on cross-shaped structures of the grid (9) and welded to said grid in the vicinity of the upper side thereof.

4. Fuel assembly according to claim 2 or 3, characterised in that the tubes (18) are welded to the spacer grid (9) by an electron beam.

5. Fuel assembly according to claim 2 or 3, characterised in that the tubes (18) are welded to the spacer grid (9) by a laser beam.

6. Fuel assembly according to claim 1, characterised in that the retaining device consists of a transverse support plate (26) fixed in an intermediate position between an adaptor plate of the bottom nozzle (20) and the underside of the spacer grid (24), to which are fixed the tubes (28) of the retaining device by their median part.

7. Fuel assembly according to claim 6, characterised in that the tubes (28) are fixed to the plate (26) by electron beam welding.

8. Fuel assembly according to claim 6, characterised in that the tubes (28) are fixed to the plate (26) by laser welding.

9. Fuel assembly according to claim 6, characterised in that the tubes (28) are fixed to the support plate (26) by brazing.

10. Fuel assembly according to any of claims 6 to 9, characterised in that tubes (27) which are longer than the tubes (28) are fixed to peripheral portions of the support plate (26) so as to constitute spacer elements which hold the retaining device between the bottom nozzle (20) and the bottom spacer grid (24).

11. Fuel assembly according to any of claims 1 to 10, characterised in that the particle retaining device is made from a nickel alloy with structural hardening.

12. Fuel assembly according to any of claims 1 to 10, characterised in that the retaining device (18,26,28) is made from a martensitic steel.
